# EUROPEAN PATENT SPECIFICATION

(11) **EP 1 491 101 B1**
(45) Date of publication and mention of the grant of the patent: **06.12.2006**
(21) Application number: 03076936.8
(22) Date of filing: 23.06.2003
(51) Int. Cl.: A23L 1/40, A23P 1/02

(54) **Marbled bouillon, broth, soup, sauce or seasoning cube and process for preparing the same**
Marmorierter Bouillon-, Sud-, Suppen-, Saucen- oder Würzwürfel und deren Herstellungsmethode
Cube marbré de bouillon, de soup, de sauces ou des condiments et leur fabrication

(43) Date of publication of application: 29.12.2004
(73) Proprietor: UNILEVER N.V., 3013 AL Rotterdam (NL); UNILEVER PLC, London EC4P 4BQ (GB)
(72) Inventor: Achterkamp, Georg, 74074 Heilbronn (DE); Doyle, John, 74074 Heilbronn (DE); Gehrmann, Manfred, 74074 Heilbronn (DE)
(74) Representative: Wurfbain, Gilles L.

(56) References cited:
- EP-A- 0 888 722
- EP-A- 0 981 970
- WO-A-02/069742
- US-A- 6 126 979

## Description

### Field of the invention

The present invention relates to cubes for preparing bouillon, broth, soup, sauce or for use as a seasoning, which cubes are prepared by compressing a matrix material and a coarse granular material having a different colour than the matrix. Such cubes can have a marbled appearance.

### Background of the invention

Solid (i.e. not free flowing liquid at room temperature) concentrates for bouillons, broths, soups, sauces and seasonings are widely used to yield a bouillon, broth, soup or sauce or be used as a seasoning in a convenient way. These concentrates are often referred to as "dry" products, as they have a dry appearance, yet such concentrates may contain up to 15 or even up to 20% of moisture, e.g. as part of the flour or starch used. The concentrates concerned usually contain one or more of the following components: salt, mono sodium glutamate, flour (or an alternative starch source), flavourings, herbs, spices, non-starch thickeners, fat and optionally other components such as e.g. (non-limiting) maltodextrin, meat extracts, vegetable matter, and colourants.

The most common physical formats in which such solid concentrates are available are powders, granulates and cubes. The powders and granulates are generally offered in sachets or jars, the cubes are usually individually wrapped and packed in a box. The powders can be prepared by mixing all ingredients in the proper proportion, optionally followed by granulating (for granules) and/or milling using equipment known in the art. Powders and granulates have some advantages, e.g. simple process, cheap packaging, and good dispersibility.

However, unit-dosage can be a distinct advantage, e.g. in terms of convenience, dosing, and appearance. The conventional cubes can be made by batch-wise mixing all ingredients and extruding the mixture (optionally under application of heat to melt fat) followed by cutting the extrudate. An example of a continuous process for shaping broth cubes as is set out in EP 981970. Alternatively, the cubes can be prepared by mixing all ingredients and pressing into shapes, e.g. using a Fette press for powdery material or a Corazza press for pasty material.

Although it is mentioned "cubes", this does not mean they should have traditional cube shape (i.e. a block with the size in all three dimensions the same: it can also be in the shape of a bar, block, tablet, brick, cylinder, pyramid, tetraeder, cone, ball or other 3-dimensional (regular or irregular) shape. Depending upon size, concentration and aim one unit of such a cube (whatever shape) is usually sufficient for preparing between 100 and 1000 ml bouillon, broth, soup, or sauce (or even up to 3 or 5 liter for catering purposes). For the purpose of this invention, all such shapes are herein referred to as "cubes".

The appearance of the currently available cubes (when unpacked, ready for use) is usually more or less uniform, although some speckles of e.g. parts of leafy herbs may be visible in an otherwise more or less uniform matrix material.

A new development has been described in WO 02/069742. In this document, bouillon cubes are disclosed having at least two parts that can be identified by vision or touch. Although referred to as multiphase, it is actually layered bouillon cubes which are exemplified.

US 6126979 discloses a method for producing a fast dissolving low fat bouillon cube wherein a powdered and an agglomerated fraction are compressed to a bouillon cube.

Although such techniques may give satisfactory results, there is a continuous demand for novel appearances and shaping techniques for solid bouillon, broth, soup, sauce and seasoning cubes (that is, concentrates in various shapes, as described above, of a certain minimum size). The cubes formed should have an attractive shape and/or appearance (e.g. novel for the area of application - bouillon, broth, soup, sauce or seasoning concentrates), and preferably should be resistant against attrition and/or breakage. As to the method and equipment used for the shaping, it is desired that the cubes to be formed should be easy to manufacture, preferably in a continuous way. Easy to manufacture also includes the use of fairly simple equipment. It can furthermore be desired that the cubes have a defined shape, and preferably are of such a size that combine easy handling and being similar to conventional bouillon, broth, soup, sauce or seasoning cubes. It is furthermore an object of the present invention that the cubes can be shaped from a powdery, granular or flaky state, e.g. without the need for melting or dissolving matter. It can be furthermore a desire that the formed particles have in relief (positive or negative, i.e. high or low) a decoration or ornamental design. Cubes having a marbled appearance are particularly desired.

### Summary of the invention

It has now been found that the above objections may be met (at least in part) by for preparing bouillon, broth, soup, sauce or seasoning cube comprising two phases of ingredients 1 and 2,
wherein fraction 1 is in the form of granules, and which process comprises the steps of:
a. mixing granules fraction 1 with ingredients fraction 2,
b. compressing a portion of mixed granules 1 and fraction 2 to a cube,
wherein ingredients fraction 1 and fraction 2 have different colours, wherein at least 80% (wt) of the preambles have a diameter of 0.5-10 mm, and wherein the fractions are present in a minimal amount of 5% (wt).

As mentioned above, fraction 1 should be present in granules. Granules herein are to be understood as particles having a certain size range (e.g. larger than powder such as flour or small salt crystals). As the ingredients for bouillon, broth, soup, sauce or seasoning concentrates are frequently in the form of powders or small particulates (ordinary kitchen salt, flour, MSG, dried vegetable powder powder, spray dried fat, maltodextrin, sugar, etcetera) such material needs to be enlarged in size first, before it can be used in the process as set out above. Reason is that too small particles will not form the desired marbled appearance, but will give a color which is a blend of the two (i.e. a yellow powder and a red powder will give an orange-colored cube when pressed).

Thus, if fraction 1 is not yet in the form of granules, the invention further relates to the above process which is preceeded by a process for preparing granules of at least fraction 1, or of more than one fraction. Although such particles are herein referred to as granules, and they can be prepared by granulation, but also by other known techniques for size enlargement of particulate material, as long as the desired particle size of the granules is obtained, and particles with the proper rigidity. Suitable techniques include granulation, agglomeration, pelletisation, sintering or extruding followed by cutting the extrudates and other techniques as known in the art of size enlargement of particulate matter. The granules suitably have a diameter of between 0.5 and 10 mm, preferably between 1 and 5 mm.

Thus, the invention further relates to a process for preparing preparing bouillon, broth, soup, sauce or seasoning cube comprising two phases of ingredients 1 and 2, which process comprises the steps of:
a. preparing granules of ingredients fraction 1,
b. mixing granules fraction 1 with ingredients fraction 2,
c. compressing a portion of mixed granules 1 and fraction 2 to a cube,
wherein ingredients fraction 1 and fraction 2 have different colours, wherein at least 80% (wt) of the granules have a diameter of 0.5-10 mm, and wherein the fractions are present in a minimal amount of 5% (wt).

It was found that if such process is carried out, 3-dimensional solid concentrates (i.e cubes, including other shapes, as defined above) can be prepared having a marbled appearance. For an optimal effect, the fractions 1 and 2 preferably have colours which can be distinguished by the human eye (e.g. yellow and red, yellow and green, white and red, white and green, red and green, etc). Also, each fraction having a different color than other fractions are preferably present in a minimum amount of 5% (wt), preferably at least 10% (wt), most preferably at least 15% (wt) to give a particularly favourable result.

The invention relates to a process for shaping larger particles out of powder or granules. Thus, the resulting particles (e.g. cubes) have a certain minimum size, e.g. (when expressed as weight) at least 2 g, preferably at least 4 g, more preferably at least 6 g, to well display the marbling effect. Thus, the invention further relates to a solid bouillon, broth, soup, sauce or seasoning cube of at least 2 g, preferably at least 4 g, more preferably at least 6 g weight, said particle comprising (at least) two phases with a different colour, and which concentrate particle has a marbled appearance. Marbled can be understood that at least two differently colored phases can be distinguished, each being present in discrete regions, said regions being randomly distributed in the cube.

### Detailed description of the invention

The process according to the invention thus requires that there are two differently coloured ingredients (or rather two fractions of ingredients, each having a color such that they can be distinguished from eachother by the human eye). More than two colours may be used. It is herein to be understood that "fraction" means part of the ingredients, which when mixed, have a different color than one or more other fractions. The number of fractions is the number of colors that need to be distinguished in the resulting marbled cube. There may of course be e.g. two yellow-colored fractions (in granules) and one red colored fraction (powder or granule): such will be understood as a two-fraction cube, when both yellow-colored granule fractions are indistinguisbale from eachother. Truly multi (more than two) colored marbled cubes will be e.g. red, yellow and green marbled, of which at least two colors will be granulated prior to mixing all fractions and pressing. The marbling effect may be combined with a layered effect as is described e.g. in WO 02/069742. For example, one marbled layer of two colors and one layer of a different color or structure. This is also encompassed by the present invention.

The differently coloured phases may consist of different ingredients, or may be identical with a different colouring material (e.g. functional ingredient such as tomato powder, pigment or soluble colouring). In the process according to the invention it was found that for a good effect (depending on the colour) each differently coloured component should be present in a minimum amount, e.g. at least 5%, preferably at least 10% wt, more preferably at least 15% wt. The colours may be selected on the basis of purely aesthetic quality or as an indication of the function (e.g. taste) or content of the cube. For example, a yellow-red marbled cube may indicate chicken-tomato soup.

As mentioned above, the cubes may be prepared of two ingredient fractions, having a distinguishable colour. It was found that at least one of the fractions should be in granule form prior to shaping into the final cube. The other fraction can be either in powder form, but may also be granulated prior to shaping into the final cube. Thus, it is preferred that in the process according to the invention wherein a cube is prepared of two differently coloured fractions, fraction 1 is granulated and fraction 2 is a powder, which fractions are then mixed and shaped into a cube. Depending upon the application, ingredients fraction 2 may also be granulated prior to mixing and shaping into cubes.

If more than two differently colored fractions are used and if it is desired that all such colors can be identified in the marbled cube, all but one fractions are preferably granulated, or all fractions are granulated prior to mixing and shaping into cubes (i.e. one fraction can be in the form of a powder, but preferably not more than one fraction is in powder form).

Granulation can be effected by techniques known in the art. For granulation a binding agent will be needed under most circumstances (for binding the other ingredients). Suitable binding agents (which do not affect the properties of the bouillon, broth, soup, sauce or seasoning, and thus are preferred) are edible fat (e.g. vegetable fats and oils) and water (including other aqueous liquids). Depending upon which binding agent is used, one can speak of water-based granules or fat-based granules. Water-based in this connection means that water is added while preparing the mix for granulation. Water will give the right binding properties for the granulation step. Most of the water is dried out after the granulation step. For fat based granules fat is used to get the right binding properties for granulation. The remainder of the ingredients of the cubes can be customary ingredients for bouillon, broth, soup, sauce or seasoning cubes or powders, although some of those mixes will already contain sufficient water or fat to be granulated.

For water based granules the granulation step it can suitably be done with a basket granulator or a twin dome granulator. The consistency/binding properties can be influenced by the ingredients (type and amount), amount of water added to the mix and energy (e.g. by mixing time) which is added into the mix during mixing. Granule stability can also be influenced by these parameters and by the diameter and thickness of the granulation mould, as well as e.g. by the conditions under which the granulator is operated.

For fat based granules a roller compactor from Bepex, a Kahl pellet press or an Alexander Granulator can suitably be used. The consistency/binding properties can be influenced by the ingredients (type and amount), consistency (melted or solid) and the melting point of fat added to the mix, and the energy (e.g. by mixing time) which is added into the mix during mixing. Granule stability can also be influenced by these parameters and by the diameter'and thickness of the granulation mould, as well as e.g. by the conditions under which the granulator is operated.

Other suitable techniques for preparing the granules include agglomeration, pelletisation, sintering or extruding followed by cutting the extrudates. Such techniques are known in the art of size enlargement of particulate matter.

As mentioned, all but one, or all differently coloured fractions should be granulated, and granules can be water-based or fat-based (depending upon the binding system chosen). For cubes with two differently coloured fractions, this would lead to a number of theoretical combinations. It was found that the combination of two (or more) differently coloured water based granules together does not work as such (unlike other theoretical combinations), as it was found a combination of water-based granules will be destroyed to powder during the pressing process. However, a combination of water-based granules with water-based granules may work well if a kind of glueing agent is used to glue the granules together.

Combinations which are preferably shaped into cubes are (in case of two differently coloured two fractions):
- fat-based granule + fat-based granule
- fat-based granule + fat-based powder mix
- fat-based granule + water-based granule
- fat-based granule + water-based powder mix
- water-based granule + fat-based powder mix
- water-based granule + water-based powder mix

Mixing of the fractions (including the granules) can be done with conventional (preferably low shear) equipment, e.g. by tumbling. The cubes can be pressed to cubes on standard equipment e.g. presses from Fette or Bonals or a roller compactor for pillow shaped products from Bepex. The cubes may have in relief (positive or negative, i.e. high or low) a decoration or ornamental design, by adapting the pressing equipment to that end. Regardless of the colors, pressing granules, e.g. fat-based granules may have advantages over pressing powdery mixes, as the flowability and dosibility is better and by this the average weight of the cubes will be more accurate. For pressing, a portion sufficient for the desired shape and size will be formed and pressed.

The hardness of the cubes can be controlled by adjusting the pressure on the presses and the recipes. Marbling effect of systems containing fat based granules can be influenced by the pressure of the press (the higher the pressure, the lower the marbling effect as the fat starts melting during pressing). Furthermore the marbling effect can in general be influenced by using fats with different melting points, the colouring system (fat or water soluble), covering/coating the granules with other fats, sugars, gelatine or maltodextrin solution.

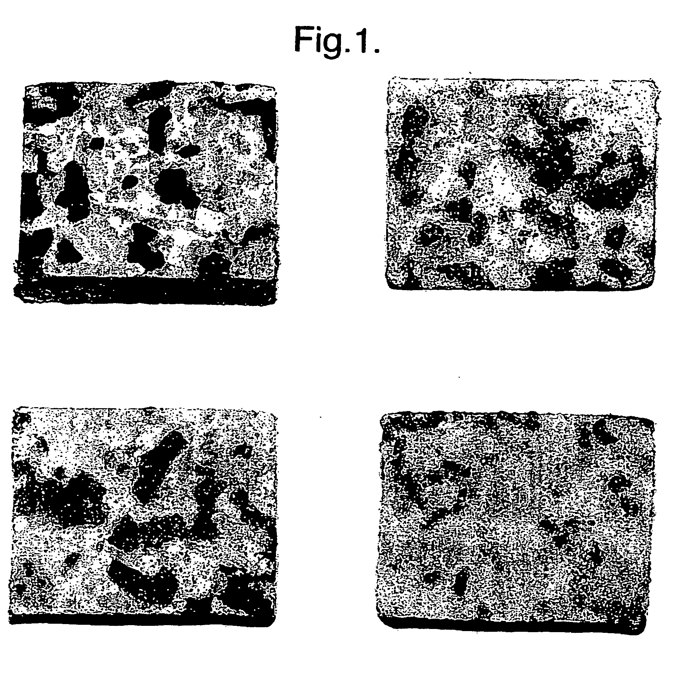

The invention further relates to the use of a cube according to this invention for preparing a bouillon, broth, soup, sauce or for use as a seasoning. Examples of bouillon cubes according to the invention are in figure 1 (weight of cubes: 10 g, size approx. 3x2.2x1.2 cm

### EXAMPLES

### Example 1: yellow/green marbled cube: chicken and coriander/garlic bouillon

Based on fat-based chicken granules and fat-based coriander/garlic granules

All ingredients as in table 1 except the fat flakes were mixed in a ploughshare mixer at 120 rpm for 2 minutes. Then the palm fat flakes were added. Mixing was continued for 5 minutes. Final product temperature about 30°C. The product was granulated on a Bepex roller granulator with a granule diameter of 1.7mm. After granulation the granules were put on trays with a layer high of approx. 2cm and stored for apporx. 1 h at 5°C. The granules were yellow.

All ingredients as in table 2 except the fat flakes were mixed in a ploughshare mixer at 120 rpm for 2 minutes. Then the palm fat flakes were added. Mixing was continued for 5 minutes. Final product temperature about 30°C. The product was granulated on a Bepex roller granulator with a granule diameter of 1.7mm. After granulation the granules were put on trays with a layer high of approx. 2cm and stored for approx. 1 h at 5°C. The granules were green.

20kg of chicken granules and 5kg of coriander/garlic granules were mixed with low shear in a tumble mixer until homogeneous.

The mixture was added into the feeding hopper of the roller compactor (e.g. as in EP 1120436) for pillow shaping. The moulds of the roller were 33x19 mm. Speed of the feeding screw: 55 rpm. Speed of the rollers: 5 rpm. Pressure 25-30 kN. The resulting product were pillow-shaped pieces having a yellow/green marbled appearance. Upon dilution with hot water and stirring a chicken-coriander/garlic bouillon was obtained.

**Table 1 Fat-based chicken granules**

| Description | Amount [%] |
|---|---|
| MSG | 33.0 |
| Salt | 31.0 |
| Palm Fat Flakes | 19.0 |
| Sugar | 8.5 |
| Minor Ingredients | 8.5 |
| | |

| Minor ingredients | Amount [%] |
|---|---|
| Cornstarch | 80 |
| Chicken Flavour | 10 |
| Modified Starch | 6 |
| Spices | 4 |

**Table 2 Fat-based coriander/garlic granules**

| Description | Amount [%] |
|---|---|
| MSG | 34.5 |
| Salt | 31 |
| Sugar | 11 |
| Minor Ingredients | 9 |
| Palm Fat flakes | 14.5 |
| | |

| Minor ingredients | Amount [%] |
|---|---|
| Cornstarch | 43 |
| Modified starch | 8 |
| Spices | 3 |
| Garlic | 20 |
| Coriander | 17 |
| Spinach powder | 9 |

### Example 2: yellow/green marbled cube: chicken and coriander/garlic bouillon

Based on fat-based chicken powder and fat-based coriander/garlic granules

All ingredients as in table 3 except the fat flakes were mixed in a ploughshare mixer at 120 rpm for 2 minutes. Then the palm fat flakes were added. Mixing was continued for 3 minutes. Final product temperature about 25°C. The mixed powder was put a in container and stored for approx. 1 h at ambient temperature. The powder mix was yellow.

All ingredients as in table 4 except the fat flakes were mixed in a ploughshare mixer at 120 rpm for 2 minutes. Then the palm fat flakes were added. Mixing was continued for 5 minutes. Final product temperature about 30°C. The product was granulated on a Bepex roller granulator with a granule diameter of 1.7mm. After granulation the granules were put on trays with a layer high of approx. 2cm and stored for approx. 1 h at ambient 5°C. The granules were green.

25kg of chicken powder and 6kg of coriander garlic granules were mixed with low shear in a tumble mixer until homogeneous.

The mixture was added into the feeding hopper of the roller compactor for pillow shaping . The moulds of the roller were 33x19 mm. Speed of the feeding screw: 55 rpm. Speed of the rollers: 5 rpm. Pressure 25-30 kN. The resulting product were pillow-shaped pieces having a yellow/green marbled appearance. Upon dilution with hot water and stirring a chicken-coriander/garlic bouillon was obtained.

**Table 3 Fat-based chicken powder**

| Description | Amount [%] |
|---|---|
| MSG | 37.0 |
| Salt | 32.0 |
| Palm Fat Flakes | 11.0 |
| Sugar | 9.5 |
| Minor Ingredients | 10.5 |
| | |

| Minor ingredients | Amount [%] |
|---|---|
| Cornstarch | 80 |
| Chicken Flavour | 10 |
| Modified Starch | 6 |
| Spices | 4 |

**Table 4Fat-based coriander/ garlic granules**

| Description | Amount [%] |
|---|---|
| MSG | 33.5 |
| Salt | 31 |
| Sugar | 11 |
| Minor Ingredients | 9 |
| Palm Fat flakes | 15.5 |
| | |

| Minor ingredients | Amount [%] |
|---|---|
| Cornstarch | 43 |
| Modified starch | 8 |
| Spices | 3 |
| Garlic | 20 |
| Coriander | 17 |
| Spinach powder | 9 |

### Example 3: white-green marbled vegetable soup cubes having roux pieces included

All ingredients as in table 5 except the powdered fat and the fat flakes mixed in a ploughshare mixer at 120 rpm for 2 minute. During mixing the fat flakes were added. Mixing was continued for 1 minutes. The product was fed through a sieve mill (30 mm) and mixed in a low shear screw mixer for 1 minute. Powdered fat was added. Mixing was continued for further 2min. After mixing the product was granulated on a Bepex roller granulator with a granule diameter of 2.0mm. After granulation the granules were put on trays with a layer high of approx. 2cm and stored for approx 1h at 5°C. The granules had a green color

The ingredients as in table 6 were mixed in a stephan cutter at 1500 rpm with scrapers. The mixture was subsequently heated up to 120°C (in a double jacket vessel with indirect steam via a double jacket). The moisture present was evaporated down to 3-5% by applying vacuum. The product was crystallised on a cooling belt. The crystallised roux was crushed by a roller crusher and then granulated on the a Bepex roller granulator with a granule diameter of 2.5mm. After granulation the granules were put on trays with a layer high of approx. 2cm and stored for approx. 1 h at 5°C. The granules had a white color.

80 kg of vegetable soup granules and 20kg of roux granules were mixed with low shear in a tumble mixer until homogeneous.

The mixture was added into the feeding hopper of the a standard bouillon cube press (Fette) and pressed into cubes of 10g. The resulting products were white-green marbled cubes suitable as a vegetable soup upon mixing with hot water, with comparable taste and use of conventional soup powders.

**Table 5 Fat-based vegetable soup granules**

| Description | Amount [%] |
|---|---|
| Powdered fat | 15 |
| Fat flakes | 8 |
| Modified starch | 5 |
| Vegetable powders | 18 |
| Maltodextrin | 9 |
| Salt | 16 |
| Sugar | 8 |
| MSG | 11 |
| Colouring agent | 1 |
| Spices | 4 |
| Extracts of green vegetables | 5 |

**Table 6 Roux granules**

| Description | Amount [%] |
|---|---|
| Vegetable fat | 40 |
| Wheat flour | 60 |

### Example 4: red/yellow marbled cube: chicken and tomato/onion/garlic seasoning

Based on fat based-chicken granules and water-based tomato/onion/garlic granules

All ingredients as in table 7 except the fat flakes were mixed in a ploughshare mixer at 120 rpm for 2 minutes. Then the palm fat flakes were added. Mixing was continued for 5 minutes. Final product temperature about 30°C. The products was granulated on a Bepex roller granulator with a granule diameter of 1.7mm. After granulation the granules were put on trays with a layer high of approx. 2cm and stored for approx. 1 h at 5°C. The granules had a yellow color.

All ingredients as in table 8 except the water were mixed in a ploughshare mixer at 120 rpm for 2 minutes. During mixing the water was added. Mixing was continued for 7 minutes with knives. Final product temperature about 35°C.The mixture was added into the feeding hopper of the Bepex basket granulator. Screen size 1.5mm diameter and 1.0mm thickness. After granulation the product was immediately dried in a fluid bed dryer at 75°C for 10min. After drying the product was put on a tray and cooled down to room temperature. The granules had a red color.

20kg of chicken granules and 4.5kg of tomato/onion/garlic granules were mixed with low shear in a tumble mixer until homogeneous.

The mixture was added into the feeding hopper of a cube press from the company Bonals and pressed into cubes of 10g. The resulting product were cube-shaped pieces having a yellow-red marbles appearance and were suitable as a chicken and tomato/onion/garlic seasoning to other foodstuffs.

**Table 7 Fat-based chicken granules**

| Description | Amount [%] |
|---|---|
| MSG | 33.0 |
| Salt | 31.0 |
| Palm Fat Flakes | 19.0 |
| Sugar | 8.5 |
| Minor Ingredients | 8.5 |
| | |

| Minor ingredients | Amount [%] |
|---|---|
| Cornstarch | 80 |
| Chicken Flavour | 10 |
| Modified Starch | 6 |
| Spices | 4 |

**Table 8 Water-based tomato-onion-garlic granules**

| Description | Amount [%] |
|---|---|
| MSG | 39.5 |
| Salt | 36 |
| Sugar | 11 |
| Minor Ingredients | 9 |
| Water | 4.5 |
| | |

| Minor ingredients | Amount [%] |
|---|---|
| Cornstarch | 41 |
| Modified starch | 8 |
| Spices | 3 |
| Onion powder | 27 |
| Garlic | 16 |
| Oleoresin (red bell pepper) | 5 |

### Example 5: yellow-green marbled cube: chicken and thyme/bayleave seasoning

Based on fat-based chicken powder and water-based thyme/bayleave granules

All ingredients as in table 9 except the fat flakes were mixed in a ploughshare mixer at 120 rpm for 2 minutes. Then the palm fat flakes were added. Mixing was continued for 3 minutes. Final product temperature about 25°C. The yellow mixed powder was put in a container and stored for approx. 1 h at ambient temperature.

All ingredients as in table 10 except the water were mixed in a ploughshare mixer at 120 rpm for 2 minutes. During mixing the water was added. Mixing was continued for 7 minutes with knives. Final product temperature about 35°C. The mixture was added into the feeding hopper of the Bepex basket granulator. Screen size 1.5mm diameter and 1.0mm thickness. After granulation the products was immediately dried in a fluid bed dryer at 75°C for 1 0min. After drying the product was put on a tray and cooled down to room temperature. The granules were green.

20kg of chicken powder and 4,5kg of thyme bayleave granules were mixed with low shear in a tumble mixer until homogeneous.

The mixture was added into the feeding hopper of a cube press from the company Bonals and pressed into cubes of 10g. The resulting product were yellow-green marbled cube-shaped pieces suitable as a chicken-thyme/bayleave seasoning for application to other foodstuffs.

**Table 8 Fat-based chicken powder**

| Description | Amount [%] |
|---|---|
| MSG | 33.0 |
| Salt | 31.0 |
| Palm Fat Flakes | 19.0 |
| Sugar | 8.5 |
| Minor Ingredients | 8.5 |
| | |

| Minor ingredients | Amount [%] |
|---|---|
| Cornstarch | 80 |
| Chicken Flavour | 10 |
| Modified Starch | 6 |
| Spices | 4 |

**Table 10 Water-based thyme/bayleave granules**

| Description | Amount [%] |
|---|---|
| MSG | 41 |
| Salt | 36 |
| Sugar | 11 |
| Minor Ingredients | 9 |
| Water | 3 |
| | |

| Minor ingredients | Amount [%] |
|---|---|
| Cornstarch | 40 |
| Modified starch | 8 |
| Spices | 3 |
| Thyme | 20 |
| Bayleave | 15 |
| Spinach powder | 14 |

### Example 6: yellow-green marbled cube: chicken and thyme/bayleave seasoning

Based on water-based chicken powder and water-based thyme/bayleave granules

All ingredients as in table 11 except the water were mixed in a ploughshare mixer at 120 rpm for 2 minutes. During mixing the water was added. Mixing was continued for 7 minutes with knives. Final product temperature about 35°C. The mixed powder was put a container and stored for approx. 1 h at ambient temperature. The powder was yellow.

All ingredients as in table 12 except the water were mixed in a ploughshare mixer at 120 rpm for 2 minutes. During mixing2 the water was added. Mixing was continued for 7 minutes with knives. Final product temperature about 35°C. The mixture was added into the feeding hopper of the Bepex basket granulator. Screen size 2.5mm diameter and 1.0mm thickness. After granulation the products was immediately dried in a fluid bed dryer at 75°C for 10min. After drying the product was put on a tray and cooled down to room temperature. The granules were green.

20kg of chicken powder and 4,5kg of thyme bayleave granules were mixed with low shear in a tumble mixer until homogeneous.

The mixture was added into the feeding hopper of a cube press from the company Bonals and pressed into cubes of 10g. The resulting product were yellow-green marbled cube-shaped pieces suitable as a chicken-thyme/bayleave seasoning for application to other foodstuffs.

**Table 11 Water-based chicken powder**

| Description | Amount [%] |
|---|---|
| MSG | 38.0 |
| Salt | 35.0 |
| Water | 3.0 |
| Sugar | 12.5 |
| Minor Ingredients | 11.5 |
| | |

| Minor ingredients | Amount [%] |
|---|---|
| Cornstarch | 80 |
| Chicken Flavour | 10 |
| Modified Starch | 6 |
| Spices | 4 |

**Table 12 Water-based thyme/bayleave granules**

| Description | Amount [%] |
|---|---|
| MSG | 41 |
| Salt | 36 |
| Sugar | 11 |
| Minor Ingredients | 9 |
| Water | 3 |
| | |

| Minor ingredients | Amount [%] |
|---|---|
| Cornstarch | 40 |
| Modified starch | 8 |
| Spices | 3 |
| Thyme | 20 |
| Bayleave | 15 |
| Spinach powder | 14 |

### Example 7: yellow-green marbled cube: chicken and oregano/basil seasoning

Based on water-based chicken powder and fat-based oregano/basil granules

All ingredients as in table 13 except the water were mixed in a ploughshare mixer at 120 rpm for 2 minutes. During mixing the water was added. Mixing was continued for 7 minutes with knives. Final product temperature about 35°C. The mixed powder was put a container and stored for approx. 1 h at ambient temperature. The powder was yellow.

All ingredients as in table 14 except the fat flakes were mixed in a ploughshare mixer at 120 rpm for 2 minutes. Then the palm fat flakes were added. Mixing was continued for 4 minutes. Final product temperature about 30°C. The products was granulated on a Bepex roller granulator with a granule diameter of 2.0mm. After granulation the granules were put on trays with a layer high of approx. 2cm and stored for approx. 1 h at 5°C. The granules were green.

45 kg of chicken powder and 11 kg of oregano-basil granules were mixed with low shear in a tumble mixer until homogeneous.

The mixture was added into the feeding hopper of a cube press from the company Bonals and pressed into cubes of 10g. The resulting product were yellow-green marbles cube-shaped pieces suitable as a chicken-thyme/bayleave seasoning for application to other foodstuffs.

**Table 13 Water-based chicken powder**

| Description | Amount [%] |
|---|---|
| MSG | 38.0 |
| Salt | 35.0 |
| Water | 3.0 |
| Sugar | 12.5 |
| Minor Ingredients | 11.5 |
| | |

| Minor ingredients | Amount [%] |
|---|---|
| Cornstarch | 80 |
| Chicken Flavour | 10 |
| Modified Starch | 6 |
| Spices | 4 |

**Table 14 Fat-based oregano-basil granules**

| Description | Amount [%] |
|---|---|
| MSG | 34.5 |
| Salt | 31 |
| Sugar | 11 |
| Minor Ingredients | 9 |
| Palm Fat flakes | 14.5 |
| | |

| Minor ingredients | Amount [%] |
|---|---|
| Cornstarch | 43 |
| Modified starch | 8 |
| Spices | 3 |
| Oregano | 7 |
| Spinach powder | 10 |
| Basil | 29 |

### Example 8: red-white marbled cube sauce suprême with creme spots

Fat-based sauce suprême granules and fat-based creme substitute granules (Creme substitute granules see EP 0779039)

All ingredients as in table 15 except the powdered fat and the fat flakes mixed in a ploughshare mixer at 120 rpm for 2 minute. During mixing the fat flakes were added. Mixing was continued for 1 minutes. The product was fed through a sieve mill (30 mm) and mixed in a low shear screw mixer for 1 minute. Powdered fat was added. Mixing was continued for further 2min. After mixing the products was granulated on a Bepex roller granulator with a granule diameter of 2.0mm. After granulation the granules were put on trays with a layer high of approx. 2cm and stored for approx. 1 h at 5°C. The granules had a red color.

All ingredients as in table 16 except were mixed in a ploughshare mixer at 120 rpm for 2 minute. After mixing the products was granulated on a Bepex roller granulator with a granule diameter of 2.5mm. After granulation the granules were put on trays with a layer high of approx. 2cm and stored for approx. 1 h at 5°C. The granules had a white color.

8 kg of sauce supreme granules and 2kg of creme substitute granules were mixed with low shear in a tumble mixer until homogeneous.

The mixture was added the feeding hopper of the roller compactor for pillow shaping. The moulds of the roller were 20x24 mm. Speed of the feeding screw: 45 rpm. Speed of the rollers: 5 rpm. Pressure 25-30-kN.

The resulting product were red-white marbled pillow-shaped pieces suitable as a sauce suprême + cream upon mixing with hot water, with comparable taste and use of conventional supreme sauce powder with extra added cream powder.

**Table 15 Fat-based supreme sauce granules**

| Description | Amount [%] |
|---|---|
| Powdered fat | 31 |
| Modified starch | 26 |
| Vegetable fat flakes | 19 |
| Maltodextrin | 7 |
| Salt | 5.5 |
| Flavours | 3.2 |
| MSG | 2 |
| Wine powder | 2 |
| Chicken fat | 2 |
| Vegetable powders | 1 |
| Colouring agent (red) | 1 |
| Spices | 0.2 |
| Vegetable extracts | 0.1 |

**Table 16 Fat-based crème substitute granules**

| Description | Amount [%] |
|---|---|
| Spray dried cream powder | 38 |
| Spray dried fat powder | 28 |
| Palm fat flakes | 28 |
| Maltodextrin | 6 |

## Claims

1. Process for preparing bouillon, broth, soup, sauce or seasoning cube comprising two phases of ingredients 1 and 2, wherein fraction 1 is in the form of granules, and which process comprises the steps of:
a. mixing granules fraction 1 with ingredients fraction 2.
b. compressing a portion of mixed granules 1 and fraction 2 to a cube,
wherein ingredients fraction 1 and fraction 2 have different colours, wherein at least 80% (wt) of the granules have a diameter of 0.5-10 mm, and wherein the fractions are present in a mimimum amount of 5% (wt).

2. Process for preparing bouillon, broth, soup, sauce or seasoning cube comprising two phases of ingredients 1 and 2, which process comprises the steps of:
a. preparing granules of ingredients fraction 1,
b. mixing granules fraction 1 with ingredients fraction 2,
c. compressing a portion of mixed granules 1 and fraction 2 to a cube,
wherein ingredients fraction 1 and fraction 2 have different colours, wherein at least 80% (wt) of the granules have a diameter of 0.5-10 mm, and wherein the fractions are present in a minimum amount of 5% (wt).

3. Process according to claim 1-2, wherein ingredients fraction 2 is a powder.

4. Process according to claim 1-2, wherein ingredients fraction 2 is made into granules prior to mixing step b.

5. Process according te claim 1, 2 or 4, wherein the granules are prepared using granulation, agglomeration, pelletisation, sintering or extruding followed by cutting the extrudates.

6. Process according to claim 1-5, wherein at least 80% (wt) of the granules have a diameter of between 1 and 5 mm.

7. Process according to claim 1-2, wherein fraction 1 and fraction 2 are selected from the following combinations:
| fraction 1 | fraction 2 |
|---|---|
| - fat-based granule | fat-based granule |
| - fat-based granule | fat-based powder mix |
| - fat-based granule | water-based granule |
| - fat-based granule | water-based powder mix |
| - water-based granule | fat-based powder mix |
| - water-based granule | water-based powder mix |

## Patentansprüche

1. Verfahren zum Herstellen von Bouillon-, Brüh-, Suppen-, Saucen- oder Würzmittelwürfel, umfassend zwei Phasen von Inhaltsstoffen 1 und 2, worin Fraktion 1 die Form von Granalien hat, und welches Verfahren die Schritte umfasst:
a. Mischen von Granalienfraktion 1 mit Inhaltsstoffefraktion 2,
b. Komprimieren eines Anteils von gemischten Granalien 1 und Fraktion 2 zu einem Würfel,
worin Inhaltsstoffefraktion 1 und Fraktion 2 unterschiedliche Farben haben, worin mindestens 80% (Gew.) der Granalien einen Durchmesser von 0,5-10 mm haben und worin die Fraktionen in einer Mindestmenge von 5% (Gew.) vorhanden sind.

2. Verfahren zum Herstellen von Bouillon-, Brüh-, Suppen-, Saucen- oder Würzmittelwürfel, umfassend zwei Phasen von Inhaltsstoffen 1 und 2, welches Verfahren die Schritte umfasst:
a. Herstellen von Granalien von Inhaltsstoffefraktion 1,
b. Mischen von Granalienfraktion 1 mit Inhaltsstoffefraktion 2,
c. Komprimieren eines Anteils von gemischten Granalien 1 und Fraktion 2 zu einem Würfel,
worin Inhaltsstoffefraktion 1 und Fraktion 2 unterschiedliche Farben haben, worin mindestens 80% (Gew.) der Granalien einen Durchmesser von 0,5-10 mm haben und worin die Fraktionen in einer Mindestmenge von 5% (Gew.) vorhanden sind.

3. Verfahren gemäß Anspruch 1-2, worin Inhaltsstoffefraktion 2 ein Pulver ist.

4. Verfahren gemäß Anspruch 1-2, worin Inhaltsstoffefraktion 2 vor Mischschritt b zu Granalien verarbeitet wird.

5. Verfahren gemäß Anspruch 1, 2 oder 4, worin die Granalien unter Verwendung von Granulierung, Agglomeration, Pelletisierung, Sintern oder Extrudieren, gefolgt von Schneiden der Extrudate, hergestellt werden.

6. Verfahren gemäß Anspruch 1-5, worin mindestens 80% (Gew.) der Granalien einen Durchmesser zwischen 1 und 5 mm haben.

7. Verfahren gemäß Anspruch 1-2, worin Fraktion 1 und Fraktion 2 ausgewählt werden aus den folgenden Kombinationen:
| Fraktion 1 | Fraktion 2 |
|---|---|
| - Fett-basierte Granalie | Fett-basierte Granalie |
| - Fett-basierte Granalie | Fett-basiertes Pulvergemisch |
| - Fett-basierte Granalie | Wasser-basierte Granalie |
| - Fett-basierte Granalie | Wasser-basiertes Pulvergemisch |
| - Wasser-basierte Granalie | Fett-basiertes Pulvergemisch |
| - Wasser-basierte Granalie | Wasser-basiertes Pulvergemisch. |

## Revendications

1. Procédé de préparation d'un cube de bouillon, de soupe, de sauce, ou d'assaisonnement comprenant deux phases d'ingrédients 1 et 2, dans lequel la fraction 1 est sous la forme de granules, ledit procédé comprenant les étapes consistant à :
a. mélanger les granules de la fraction 1 avec les ingrédients de la fraction 2 ;
b. compresser une portion de granules 1 et de fraction 2 mélangés en un cube,
dans lequel les ingrédients de la fraction 1 et de la fraction 2 ont des couleurs différentes,
dans lequel au moins 80 % (en poids) des granules ont un diamètre de 0,5-10 mm, et
dans lequel les fractions sont présentes dans une quantité minimum de 5 % (en poids).

2. Procédé de préparation d'un cube de bouillon, de soupe, de sauce, ou d'assaisonnement comprenant deux phases d'ingrédients 1 et 2, ledit procédé comprenant les étapes consistant à :
a. préparer des granules des ingrédients de la fraction 1 ;
b. mélanger les granules de la fraction 1 avec les ingrédients de la fraction 2,
c. compresser une portion de granules 1 et de fraction 2 mélangés en un cube,
dans lequel les ingrédients de la fraction 1 et de la fraction 2 ont des couleurs différentes,
dans lequel au moins 80 % (en poids) des granules ont un diamètre de 0,5-10 mm, et
dans lequel les fractions sont présentes dans une quantité minimum de 5 % (en poids).

3. Procédé selon la revendication 1 - 2, dans lequel les ingrédients de la fraction 2 sont en poudre.

4. Procédé selon la revendication 1-2, dans lequel les ingrédients de la fraction 2 sont mis sous forme de granules avant l'étape de mélange 2.

5. Procédé selon la revendication 1, 2 ou 4, dans lequel les granules sont préparées par granulation, agglomération, pelletisation, frittage ou extrusion suivie d'une découpe du produit extrudé.

6. Procédé selon la revendication 1 - 5, dans lequel au moins 80 % (en poids) des granules ont un diamètre entre 1 et 5 mm.

7. Procédé selon la revendication 1-2, dans lequel la fraction 1 et la fraction 2 sont choisies parmi les combinaisons suivantes :
| Fraction 1 | Fraction 2 |
|---|---|
| - granule à base de graisse | - granule à base de graisse |
| - granule à base de graisse | - mélange de poudre à base de graisse |
| - granule à base de graisse | - granule à base d'eau |
| - granule à base de graisse | - mélange de poudre à base d'eau |
| - granule à base d'eau | - mélange de poudre à base de graisse |
| - granule à base d'eau | - mélange de poudre à base d'eau. |
